# EUROPEAN PATENT SPECIFICATION

(11) **EP 2 367 712 B1**
(45) Date of publication and mention of the grant of the patent: **27.02.2013**
(21) Application number: 08875494.0
(22) Date of filing: 19.12.2008
(51) Int. Cl.: B62D 21/14, B62D 55/084

(54) **VARIABLE GAUGE UNDERCARRIAGE**
UNTERGESTELLT MIT VERÄNDERLICHER SPURWEITE
TRAIN ROULANT À ÉCARTEMENT VARIABLE

(43) Date of publication of application: 28.09.2011
(73) Proprietor: Caterpillar Commercial S.A.R.L., 93208 Paris, Saint-Denis (FR)
(72) Inventor: GALLIGNANI, Luigi, I-40026 Imola (IT)
(74) Representative: Modiano, Micaela Nadia
(86) International application number: PCT/EP2008/068024
(87) International publication number: WO 2010/069393

(56) References cited:
- EP-A- 0 705 944
- GB-A- 1 205 657
- US-A- 3 712 398

## Description

### Technical Field

This disclosure relates to variable gauge undercarriages of vehicles. This disclosure relates particularly to variable gauge track laying undercarriages having integrated cables.

### Background

Track laying undercarriages with variable gauges may be generally known. Such undercarriages may comprise of a central frame which may be adapted to support operating machinery such as earth moving machines and cranes, and lateral sub-frames which may support the tracks. The sub-frames may flank the central frame. Movement of the tracks may be attained through translational motors carried in the sub-frames.

Various engineering vehicles, such as cranes, excavators or earth moves, may incorporate a variable gauge undercarriage. The variable gauge undercarriages may be restricted in width for transportation of the engineering vehicle. While during operation the undercarriage of the engineering vehicle may be extended as the vehicle may be required to perform certain functions, such as excavating or transporting earth or other functions in which the general performance of the machine is contingent on ground stability. The width of the undercarriage may be increased during operation in order to have large ground stability dimensions.

Commonly, the change in the width of the undercarriage, through lateral movement of the sub-frames may be achieved by means of hydraulic actuators, usually constituted by hydraulic cylinders installed on the vehicle. The central frame and sub-frames may be coupled to each other through cross-members. The cross members may slide in opposite directions to retract the sub-frames closer to the central frame or to extend the sub-frames further from the central frame.

Movement of the engineering vehicle may be controlled from a cab connected to the central chassis of the undercarriage. Cables may be connected from the cab to the undercarriages. The undercarriage may also comprise cables in the chassis and the sub-frames for control of the translational motors and the hydraulic cylinders. Such cables may be external to the undercarriage. During movement of the vehicle the externally located cables may become entangled with parts of the undercarriage or with other objects. Such occurrence may be more likely with the undercarriage in a fully retracted position as the cables may be slack.

In the art, a known undercarriage may comprise flexible tubes for control of hydraulic cylinders and translational motors. The undercarriage may further comprise containment means for retaining the flexible tubes within the body of the undercarriage. However, during lateral movement of the sub-frames the flexible tubes may be become caught within the undercarriage and, consequently, may be subjected to damage inducing stresses. The flexible tubes may also not be easily accessible for maintenance or repair works.

EP0705944 Al discloses an apparatus for adjusting spacing between a pair of caterpillar tracks of a working vehicle such as a backhoe. The caterpillar tracks may be supported by a chassis frame. The caterpillar tracks may be moved independently of each other relative to the chassis frame by hydraulic cylinders. Hydraulic hoses may extend between the chassis frame and the caterpillar tracks. This EP document's disclosure is taken as basis for the preamble features of claims 1 and 11.

The present disclosure is directed, at least in part, to improving or overcoming one or more aspects of the prior art system.

### Brief Summary of the Invention

In the main aspect, the present disclosure describes a variable gauge undercarriage for a vehicle comprising: a chassis having an integrated chassis cable; at least one carriage coupled to the chassis for relative lateral movement, the carriage having an integrated carriage cable; driving cylinders for actuating lateral movement of the carriage relative to the chassis; and a cable connection element positioned at a junction for connecting the integrated carriage cable to the integrated chassis cable.

In a second aspect, the present disclosure describes a method of connecting cables in an undercarriage comprising: positioning a cable connection element at a junction for connecting an integrated carriage cable in a carriage to an integrated chassis cable in a chassis, wherein the carriage is coupled to the chassis for relative lateral movement actuated by driving cylinders; connecting the integrated carriage cable to a side of the cable connection element; and connecting the integrated chassis cable to the opposite side of the cable connection element.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is a schematic representation of a top view of a variable gauge undercarriage according to the present disclosure;
Fig. 2 is a schematic representation of a side view of a variable gauge undercarriage according to the present disclosure;
Fig. 3 is an isometric view of a cable connection element according to the present disclosure;
Fig. 4 is a schematic representation of a connection element connected between carriage cables and chassis cables according to the present disclosure;
Fig. 5 is a schematic representation of a connection element connected to carriage cables and to a chassis conduit according to the present disclosure; and
Fig. 6 is s a schematic representation of a connection element connected to carriage cables and connected between a chassis conduit and a side of a carriage conduit according to the present disclosure.

### Detailed Description

This disclosure generally relates to a variable gauge undercarriage of a vehicle having integrated cables and comprising a cable connection element for connecting the integrated cables.

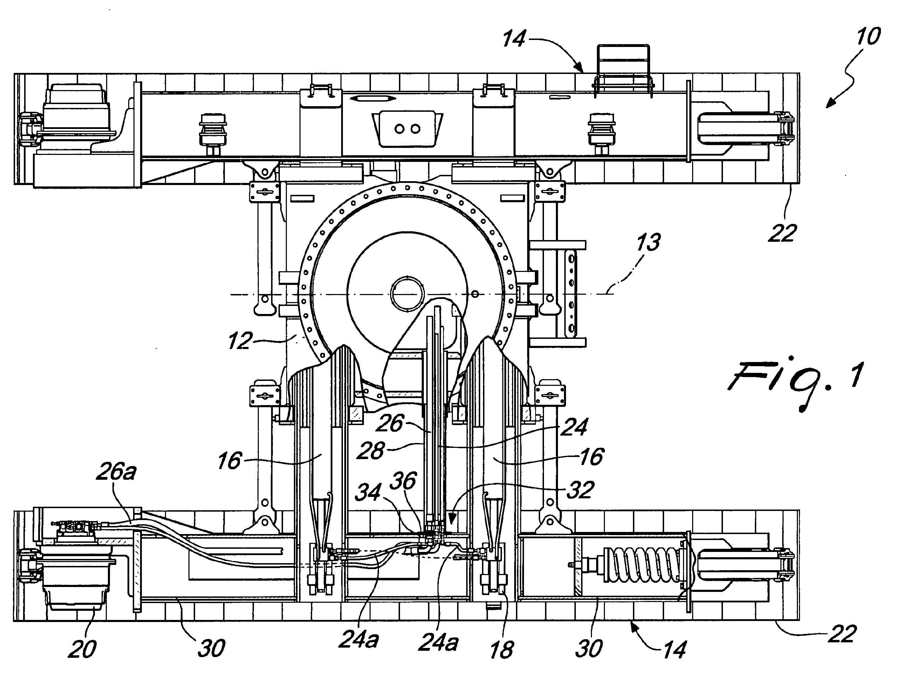

Fig. 1 illustrates a variable gauge undercarriage **10** for a vehicle, for instance an engineering vehicle. Variable gauge undercarriage **10** may comprise a central chassis **12** and two lateral carriages **14.** Each carriage **14** may move relative to the chassis **12** by actuation of hydraulic cylinders **16.** The carriages **14** may move laterally to an extended position or to a retracted position, relative to the chassis **12.**

The chassis **12** and carriages **14** may have interacting components, for instance cross members, for the lateral movement of the carriages **14** relative to the chassis **12.** The components that may be provided on the ends of the chassis **12** and each carriage **14** and the components may be of the prism-shaped type to ensure the required alignment between the chassis **12** and carriages **14.**

Each hydraulic cylinder **16** may produce the actuation to extend or retract the variable gauge undercarriage **10** by moving the carriages **14.** By supplying hydraulic cylinders **16** with the appropriate hydraulic pressure, the cylinders **16** may actuate the mutual interacting components to slide relative to one another. Extension of the hydraulic cylinders **16** may cause a corresponding extension of the carriages **14** away from the chassis **12.** Conversely, a retraction of the hydraulic cylinders **16** may cause a corresponding retraction of the carriages **14** towards the chassis **12.**

Supports **18** may be provided in each of the carriages **14.** Each support **18** may couple to and retain an end of each hydraulic cylinder **16.** In an embodiment, the variable gauge undercarriage **10** may comprise two pairs of hydraulic cylinders **16.** Each pair of hydraulic cylinders **16** may be connected between a carriage **14** and the chassis **12.** An end of each hydraulic cylinder **16** may be coupled to the support **18** in the carriage **14** and the opposite end may be coupled within the chassis **12.** In another embodiment, the variable gauge undercarriage **10** may comprise a pair of hydraulic cylinders **16** connected between both of the lateral carriages **14.** An end of each hydraulic cylinder **16** may be coupled to the support **18** in one carriage 14 and the opposite end may be coupled to the support **18** in the other carriage **14.**

Fig. 1 illustrates the two extreme conditions of a variable gauge undercarriage **10:** a carriage **14** in a retracted position and another carriage **14** in an extended position. The positions may be attained through respective lateral movements of the carriages **14** relative to chassis **12** where the lateral movement may be actuated by the hydraulic cylinders **16.**

Variable gauge undercarriage **10** may comprise a translational motor **20** and a track **22** on each carriage **14.** Translational motors **20** may act on the tracks **22** for movement of the tracks **22.** Translational motors **20** may be hydraulically actuated.

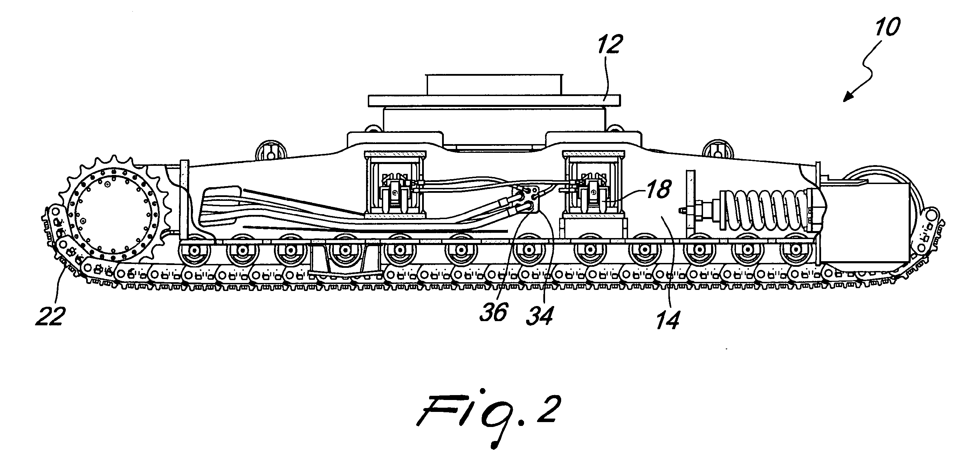

With reference to Fig. 1 and Fig. 2, variable gauge undercarriage **10** may comprise integrated cables, for instance hydraulic cables. The integrated cables may be located within the internal structures of the chassis **12** and carriages **14** and the integrated cables may allow for the hydraulic operational control of hydraulic cylinders **16** and translational motors **20.** A set of cylinder cables may be provided for control of each hydraulic cylinder **16** and a set of motor cables may be provided for control of each translational motor **20.**

The set of cylinder cables may comprise of at least a cylinder chassis cable **24** and at least a cylinder carriage cable **24a.** The cylinder chassis cable **24** may have an end connected in the chassis **12** and may extend to the carriage **14.** The cylinder carriage cable **24a** may have an end connected to a hydraulic cylinder **16** and may extend to the chassis **12.** The set of cylinder cables may comprise of further cylinder chassis cables **24** and cylinder carriage cables **24a.**

The set of motor cables may comprise of at least a motor chassis cable **26** and at least a motor carriage cable **26a.** The motor chassis cable **26** may have an end connected in the chassis **12** and may extend to the carriage **14.** The motor carriage cable **26a** may have an end connected to a translational motor **20** and may extend to the chassis **12.** The set of motor cables may comprise of further motor chassis cables **26** and motor carriage cables **26a.**

With reference to Fig. 1, variable gauge undercarriage **10** may comprise conduits for accommodating the integrated cables. Conduits may provide a guide for the integrated cables to their respective connection ports. In another embodiment conduits may be tubes of suitable materials or struts machined the in variable gauge undercarriage **10.**

A chassis conduit **28** may be provided for the cylinder chassis cable **24** and the motor chassis cable **26.** The longitudinal axis of chassis conduit **28** may be substantially perpendicular to the central axis **13** of the chassis **12.** In another embodiment separate chassis conduits **28** may be provided for the cylinder chassis cable **24** and the motor chassis cable **26.**

A carriage conduit **30** may be provided in the carriage **14** to accommodate the cylinder carriage cable **24a** and the motor carriage cable **26a.** The carriage conduit **30** may extend along the carriage **14.** The longitudinal axis of the carriage conduit **30** may be substantially parallel to the central axis **13** of the chassis **12.** In another embodiment separate carriage conduits **30** may be provided for the cylinder carriage cable **24a** and the motor carriage cable **26a.**

Chassis conduit **28** and carriage conduit **30** may intersect at a junction **32.** Junction **32** may be bound by edges **34.** Longitudinal axis of chassis conduit **28** may be substantially perpendicular to the longitudinal axis of the carriage conduit **30.**

In another embodiment the chassis conduit **28** and carriage conduit **30** may be formed as a continuous conduit. In a further embodiment, a continuous conduit may be provided for the cylinder chassis cable **24** and the cylinder carriage cable **24a** and another separate continuous conduit may be provided for the motor chassis cable **26** and the motor carriage cable **26a.** In these embodiments, junction **32** may be formed at a bend in the continuous conduits.

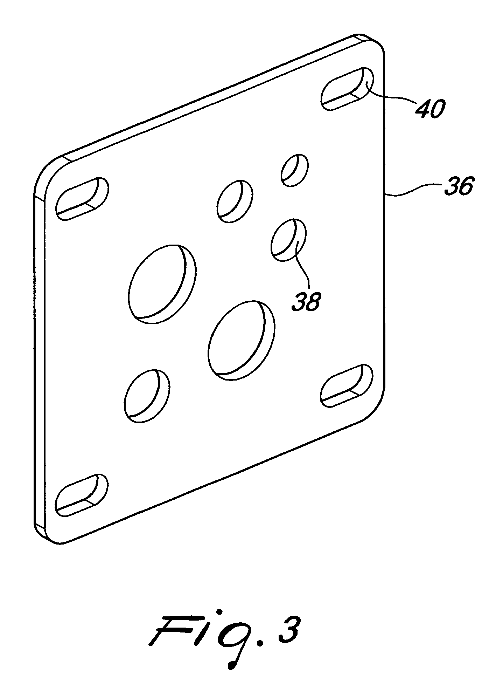

With reference to Fig. 3, the variable gauge undercarriage **10** may comprise a cable connection element **36.** Connection element **36** may be a panel having connection holes **38** for connection of sockets. Connection element **36** may also have mounting holes **40** for mounting thereof to a support in the variable gauge undercarriage **10.**

Connection element **36** may have a transverse plane that may perpendicularly intersect the longitudinal axes of the connection holes **38** and the mounting holes **40.** Cable connection element **36** may be made from suitable materials, such as plastic or metallic materials.

A hydraulic connection may be set up between the cylinder cables in the chassis **12** and carriage **14.** Another hydraulic connection may be set up between the motor cables in the chassis **12** and carriage **14.** Both connections may be formed through the cable connection element **36.** The hydraulic cylinders **16** and translational motors **20** may be operationally controlled by the hydraulic connections.

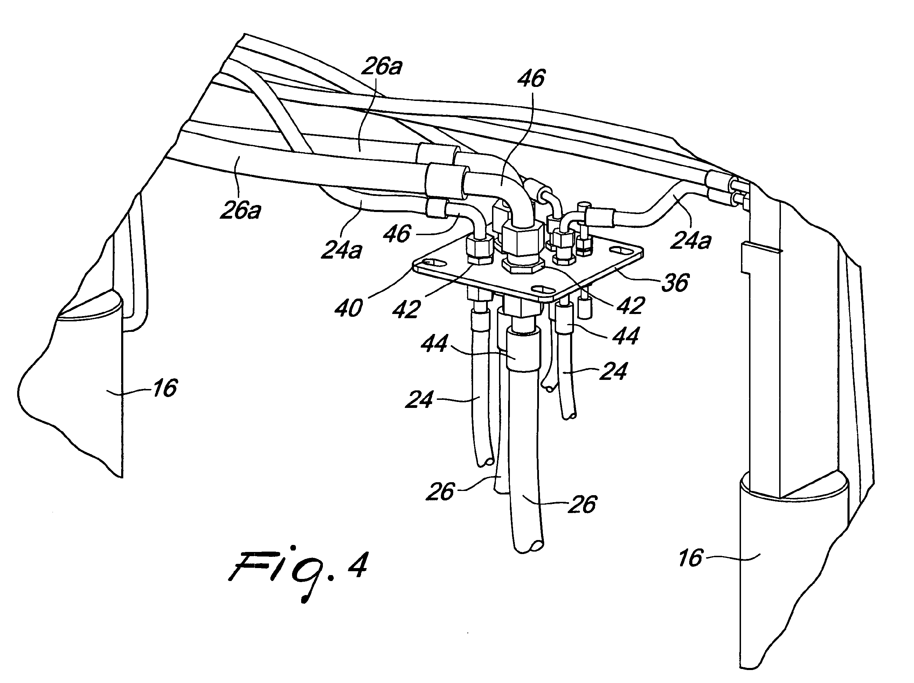

With reference to Fig. 4, cable connection element **36** may further comprise sockets **42.** Sockets **42** are supported in the connection holes **38.** The connection element **36** may connect the cylinder chassis cable **24** to the cylinder carriage cable **24a** and may connect the motor chassis cable **26** to the motor carriage cable **26a,** through sockets **42.** On one side of the connection element **36** the sockets **42** connect to the cylinder cables, for instance cylinder chassis cable **24.** At the other side of the connection element **36,** the sockets **42** may connect to the carriage cables, for instance cylinder carriage cable **24a.**

At one end the cylinder chassis cable **24** may be connected to a connection port in the chassis **12** and at the other end the cylinder chassis cable **24** may be connected to socket **42** in the connection element **36.** The cylinder carriage cable **24a** may be connected between the opposite end of the socket **42** and a connection port in the hydraulic cylinder **16.**

Both the cylinder chassis cable **24** and the cylinder carriage cable **24a** remain substantially linear along the respective cable conduits with the connection element connecting the cables.

At one end the motor chassis cable **26** may be connected to a connection port in the chassis **12** and at the other end the motor chassis cable **26** may be connected to socket **42** in the connection element **36.** The motor carriage cable **26a** may be connected between the opposite end of the socket **42** at one end and may be connected to a connection port in the translational motor **20** at the other end.

Both the motor chassis cable **26** and the motor carriage cable **26a** remain substantially linear along the respective conduits with the connection element connecting the cables.

In an embodiment, cable connectors may connect the cylinder cables and the carriage cables to sockets **42.** Straight cable connectors **44** may connect chassis cables to the sockets **42** and angled cable connectors **46** may connect carriage cables to the sockets **42.**

The connection element **36** may be positioned at an angle between 0° to 90° relative to the junction **32.**

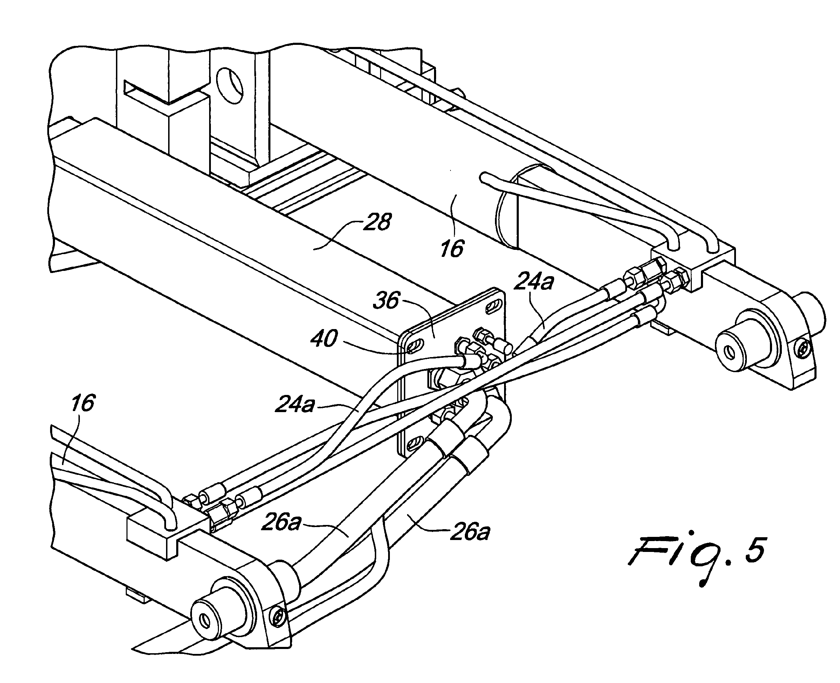

With reference to Fig. 5, cable connection element **36** may be mounted to chassis conduit **28,** for instance through mounting holes **40,** such that the longitudinal axis of the chassis conduit **28** may perpendicularly intersect the transverse plane of the connection element **36**. Connection element **36** may have an angle of 0° relative to junction **32.** In an embodiment, cable connection element **36** may be removably mounted.

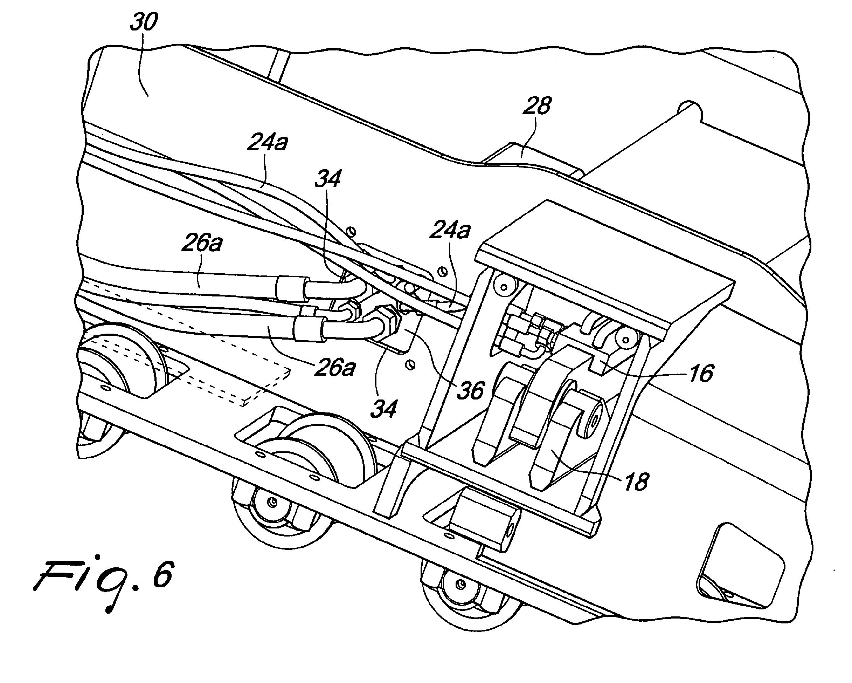

With reference to Fig. 6, cable connection element **36** may be mounted between the chassis conduit **28** and the carriage conduit **30** at junction **32.** In an embodiment, cable connection element **36** may be removably mounted between the chassis conduit **28** and the carriage conduit **30.**

In another embodiment, the connection element **36** may be mounted in the carriage conduit **30** such that a side may abut the chassis conduit **28** at junction **32** and the longitudinal axis of the carriage conduit **30** may perpendicularly intersect the transverse plane of the connection element **36.** The transverse plane of the connection element **36** may be aligned with the longitudinal axis of the chassis conduit **28.** Connection element **36** may have an angle of 90° relative to junction **32.**

In the foregoing embodiment, straight cable connectors **44** may connect carriage cables to the sockets **42** and angled cable connectors **46** may connect chassis cables to the sockets **42.** The chassis cylinder cable **24** for each hydraulic cylinder **16,** which are positioned at either sides of junction **32,** may be connected to opposite sides of the connection element **36.** The connection element **36** may be removably mounted. The connection element **36** may be mounted to supports in the carriage conduit **30.**

In yet another embodiment, the connection element **36** may be mounted in the carriage conduit **30** such that a side may abut the chassis conduit **28** at junction **32** and the transverse plane thereof may be oblique relative to the longitudinal axes of both the carriage and chassis conduits. Connection element **36** may have an angle of 45° relative to junction **32.** The connection element **36** may be removably mounted. The connection element **36** may be mounted to supports in the carriage conduit **30.**

In an embodiment, sockets **42** may be extended and angled for connection with either the cylinder or chassis cables or both sets of cables. The cylinder and chassis cables may be connected to the sockets **42** with straight cable connectors **44.**

The connection element **36** may be seated in a frame mounted to either the chassis or carriage conduits. The frame may releasably couple connection element **36.**

The chassis **12** may comprise of a cable compartment for retaining excess cylinder chassis cable **24** and motor chassis cable **26** within chassis **12.** The cable compartment may have openings for receiving slack the cylinder chassis cable **24** and motor chassis cable **26.**

Variable gauge undercarriage **10** may further comprise an access panel. Access panels may be provided on carriages **14.** The access panels may be removably retained on the sides of the carriages **14.** In another embodiment access panels may be pivotably connected at an edge to sides of carriages **14.**

Access panels may be at a closed position at which the access panels seals an opening and the interior of a carriage may not be accessible through the opening. At an open position of the access panel, the opening may be uncovered and the interior of the carriage may be accessible.

Access panels may be positioned on sides of the carriage **14** in proximity to support **18,** cylinder cables or motor cables.

Access panels may be positioned at junction **32** in proximity to the connection element **36.** With the access panel in the open position the connection element **36** may be accessible from the exterior of the carriage **14.** In an embodiment, the connection element **36** may be removed and extracted to the exterior of variable gauge undercarriage **10.**

In another embodiment cable connection element **36** may be mounted to the access panels.

In operation, with the carriages **14** in the retracted positions the hydraulic cylinders **16** may be activated to extend one of the carriages **14** to a desired position. Upon activation pressure may be increased in a cylinder chassis cable **24** and corresponding cylinder carriage cable **24a** through the connection element **36.** The hydraulic cylinders **16** may move the corresponding carriage **14** to the desired position. As the hydraulic cylinders **16** extend the carriage **14** the connection member **36** may move with the carriage **14** away from the chassis **12.**

The cylinder chassis cable **24** and the motor chassis cable **26** may extend to adjust to the increasing distance of the connection element **36** from the chassis **12.** Extending cylinder chassis cable **24** and the motor chassis cable **26** may be supplied from excess cable stored in the cable compartment. Cylinder carriage cable **24a** and the motor carriage cable **26a** are not lengthened by the movement of the carriage **14** away from the chassis **12.**

From an extended position the hydraulic cylinders **16** may move the corresponding carriage **14** to the retracted position. The hydraulic cylinders **16** retract as hydraulic pressure is increased. As the hydraulic cylinders retract the carriage **14,** the connection element **36** moves with the carriage **14** towards the chassis **12.**

The cylinder chassis cable **24** and the motor chassis cable **26** may decrease in length as the distance of the connection element **36** from the chassis **12** decreases. Excess cylinder chassis cable **24** and the motor chassis cable **26** may be guided into the cable compartment. Cylinder carriage cable **24a** and the motor carriage cable **26a** are not decreased by the movement of the carriage **14** towards the chassis **12.**

Cable connection element **36** may retain the cylinder cables and the motor cables away from the edges **34** of junction **32** during movement of the carriage **14** away or towards the chassis **12.**

The skilled person would realise that foregoing embodiments may be modified to obtain the variable gauge undercarriage **10** of the present disclosure

### Industrial Applicability

This disclosure describes a variable gauge undercarriage **10** comprising a cable connection element **36** for connection of integrated cables.

In the operation of variable gauge undercarriage **10,** the tracks **22** may be extended or retracted according to work or external requirements, by hydraulic cylinders **16.** The tracks **22** may be retracted during transportation of the vehicle and extended at the work site. The tracks **22** may be extended to the maximum positions or intermediate positions as required.

During relative lateral movement of carriage **14** integrated cables may be held away from edges **34** by the connection element **36.** Integrated cables may not be snagged at edges **34** during lateral movement of the carriages **14** and may not be subjected to damage inducing stresses. As integrated cables are substantially linear the flow of hydraulic fluid through the cables may not be restricted.

Integrated cables may be split between carriage side cables and chassis side cables. During relative lateral movement of the carriages **14,** carriage side cables and the respective connections to the hydraulic cylinders **16** and the translational motors **20** may not be subjected to any stress as length of the cables are not altered.

Access panels on carriages **14,** when in the open position may allow access to the integrated cables and hydraulic cylinders **16** through the openings for maintenance of the cables and the cylinders. The hydraulic cylinders **16** may be disassembled through the openings without disassembly of the carriages **14** from the chassis **12.**

Cable connection element **36** may be extracted through the opening for maintenance of the element and the integrated cables connected thereto.

The industrial applicability of the variable gauge undercarriage **10** as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

## Claims

1. A variable gauge undercarriage (10) for a vehicle comprising:
a chassis (12) having an integrated chassis cable (24, 26);
at least one carriage (14) coupled to the chassis (12) for relative lateral movement, the carriage (14) having an integrated carriage cable (24a, 26a); and
driving cylinders (16) for actuating lateral movement of the carriage (14) relative to the chassis (12),
**characterised in that** the variable gauge undercarriage (10) further comprises a cable connection element (36) positioned at a junction (32) for connecting the integrated carriage cable (24a, 26a) to the integrated chassis cable (24, 26).

2. The undercarriage of claim 1 wherein the connection element (36) is positioned in the junction (32) at an angle between 0° to 90°.

3. The undercarriage of claims 1 or 2 wherein the connection element (36) is mounted to the chassis conduit (28).

4. The undercarriage of claim 3 wherein the transverse plane of the connection element (36) is perpendicular to the longitudinal axis of the chassis conduit (28).

5. The undercarriage of any of the preceding claims wherein the connection elements (36) comprises at least one socket (42) for the connection of the carriage cable (24a, 26a) to the chassis cable (24, 26).

6. The undercarriage of any one of the preceding claims wherein the at least one carriage (14) further comprises an access panel.

7. The undercarriage of claim 6 wherein the access panel is positioned proximate to the connection element (36) for external access thereto.

8. The undercarriage of claims 6 wherein the connection element (36) is mounted to the access panel.

9. The undercarriage of any one of the preceding claims further comprising a frame, the connection element being removably coupled thereto.

10. The undercarriage of any one of the preceding claims wherein the carriage cable (24a, 26a) and the chassis cable (24, 26) are substantially linear in the carriage conduit (30) and the chassis conduit (28) respectively.

11. A method of connecting cables in an undercarriage of any one of the preceding claims, the method **characterised in** the steps of:
positioning a cable connection element (36) at a junction (32) for connecting an integrated carriage cable (24a, 26a) in a carriage (14) to an integrated chassis cable (24, 26) in a chassis (12), wherein the carriage (14) is coupled to the chassis (12) for relative lateral movement actuated by driving cylinders (16);
connecting the integrated carriage cable (24a, 26a) to a side of the cable connection element (36); and
connecting the integrated chassis cable (24, 26) to the opposite side of the cable connection element (36).

12. The method of claim 11 comprising the step of positioning the connection element (36) at a side of the chassis conduit (28).

13. The method of claims 11 or 12 comprising the step of positioning connection element (36) at an angle between 0° to 90° relative to the junction (32).

## Patentansprüche

1. Fahrgestell (10) mit variabler Spurweite für ein Fahrzeug, das folgendes umfasst:
ein Chassis (12), das ein integriertes Chassis-Kabel (24, 26) aufweist; wenigstens ein Fahrwerk (14), das mit dem Chassis (12) für eine relative laterale Bewegung verbunden ist, wobei das Fahrwerk (14) ein integriertes Fahrwerkkabel (24a, 26a) aufweist; und
Antriebszylinder (16) zum Auslösen der lateralen Bewegung des Fahrwerks (14) relativ zum Chassis (12),
**dadurch gekennzeichnet, dass** das Fahrgestell (10) mit variabler Spurweite zudem ein Kabelverbindungselement (36) aufweist, das an einer Verbindungsstelle (32) angeordnet Ist, um das integrierte Fahrwerkkabel (24a, 26a) mit dem integrierten Chassis-Kabel (24, 26) zu verbinden.

2. Fahrgestell nach Anspruch 1, wobei das Verbindungselement (36) in der Verbindungsstelle mit einem Winkel zwischen 0 Grad und 90 Grad angeordnet ist.

3. Fahrgestell nach Anspruch 1 oder 2, wobei das Verbindungselement (36) an dem Chassis-Kabelkanal (28) befestigt ist.

4. Fahrgestell nach Anspruch 3, wobei die Transversalebene des Verbindungselementes (36) senkrecht zur Längsachse des Chassis-Kabelkanals (28) verläuft.

5. Fahrgestell nach einem der vorstehenden Ansprüche, wobei die Verbindungselemente (36) wenigstens einen Sockel (42) zum Verbinden des Fahrwerkkabels (24a, 26a) mit dem Chassiskabel (24, 26) umfasst.

6. Fahrgestell nach einem der vorstehenden Ansprüche, wobei das wenigstens eine Fahrwerk (14) zudem einen Zugangsdeckel aufweist.

7. Fahrgestell nach Anspruch 6, wobei der Zugangsdeckel benachbart zu dem Verbindungselement (36) angeordnet ist, um von außen Zugang dazu zu ermöglichen.

8. Fahrgestell nach Anspruch 6, wobei das Verbindungselement (36) an dem Zugangsdeckel befestigt ist.

9. Fahrgestell nach einem der vorstehenden Ansprüche, das zusätzlich einen Rahmen aufweist, wobei das Verbindungselement entfernbar an diesem befestigt ist.

10. Fahrgestell nach einem der vorstehenden Ansprüche, wobei das Fahrwerkkabel (24a, 26a) und das Chassis-Kabel (24, 26) im Wesentlichen linear im Fahrwerkkabelkanal (30) beziehungsweise im Chassis-Kabelkanal (28) angeordnet sind.

11. Verfahren zum Verbinden von Kabeln in einem Fahrgestell nach einem der vorstehenden Ansprüche, wobei das Verfahren durch folgende Schritte gekennzeichnet ist:
Positionieren eines Kabelverbindungselementes (36) an einer Verbindungsstelle (32), um ein Integriertes Fahrwerkkabel (24a, 26a) in einem Fahrwerk (14) mit einem integrierten Chassis-Kabel (24, 26) in einem Chassis (12) zu verbinden, wobei das Fahrwerk (14) mit dem Chassis (12) für eine relative laterale Bewegung verbunden ist, die durch Antriebszylinder (16) ausgelöst wird,
Verbinden des integrierten Fahrwerkkabels (24a, 26a) mit einer Seite des Kabelverbindungselementes (36) und
Verbinden des integrierten Chassis-Kabels (24, 26) mit der entgegengesetzten Seite des Kabelverbindungselementes (36).

12. Verfahren nach Anspruch 11, das den Schritt des Positionierens des Verbindungselementes (36) an einer Seite des Chassis-Kabelkanals (28) aufweist.

13. Verfahren nach Anspruch 11 oder 12, das den Schritt des Positionlerens des Verbindungselementes (36) in einem Winkel zwischen 0 Grad und 90 Grad relativ zur Verbindungsstelle (32) aufweist.

## Revendications

1. Train roulant à écartement variable (10) pour véhicule comprenant :
un châssis (12) comportant un câble de châssis intégré (24, 26) ;
au moins un chariot (14) couplé au châssis (12) pour suivre un mouvement latéral relatif, le chariot (14) comportant un câble de chariot intégré (24a, 26a) ; et
des vérins d'entraînement (16) pour activer le mouvement latéral du chariot (14) par rapport au châssis (12),
**caractérisé en ce que** le train roulant à écartement variable (10) comprend en outre un élément de connexion de câble (36) positionné au niveau d'une jonction (32) pour connecter le câble de chariot intégré (24a, 26a) au câble de châssis intégré (24, 26).

2. Train roulant selon la revendication 1, dans lequel l'élément de connexion (36) est positionné dans la jonction (32) suivant un angle compris entre 0° et 90°.

3. Train roulant selon la revendication 1 ou 2, dans lequel l'élément de connexion (36) est monté sur la conduite de châssis (28).

4. Train roulant selon la revendication 3, dans lequel le plan transversal de l'élément de connexion (36) est perpendiculaire à l'axe longitudinal de la conduite de châssis (28).

5. Train roulant selon l'une quelconque des revendications précédentes, dans lequel l'élément de connexion (36) comprend au moins une douille (42) pour la connexion du câble de chariot (24a, 26a) au câble de châssis (24, 26).

6. Train roulant selon l'une quelconque des revendications précédentes, dans lequel ledit au moins un chariot (14) comprend en outre un panneau d'accès.

7. Train roulant selon la revendication 6, dans lequel le panneau d'accès est positionné à proximité de l'élément de connexion (36) pour l'accès externe de celui-ci

8. Train roulant selon la revendication 6, dans lequel l'élément de connexion (36) est monté sur le panneau d'accès.

9. Train roulant selon l'une quelconque des revendications précédentes, comprenant en outre un cadre, l'élément de connexion étant accouplé de façon amovible à celui-ci.

10. Train roulant selon l'une quelconque des revendications précédentes, dans lequel le câble de chariot (24a, 26a) et le câble de châssis (24, 26) sont substantiellement linéaires respectivement dans la conduite de chariot (30) et dans la conduite de châssis (28).

11. Procédé de connexion de câbles dans un train roulant de l'une quelconque des revendications précédentes, le procédé étant **caractérisé par** les étapes suivantes :
positionner un élément de connexion de câble (36) au niveau d'une jonction (32) pour connecter un câble de chariot intégré (24a, 26a) dans un chariot (14) à un câble de châssis intégré (24, 26) dans un châssis (12), dans lequel le chariot (14) est accouplé au châssis (12) pour un mouvement latéral relatif activé par des vérins d'entraînement (16) ;
connecter le câble de chariot intégré (24a, 26a) à un côté de l'élément de connexion de câble (36) ; et
connecter le câble de châssis intégré (24, 26) au côté opposé de l'élément de connexion de câble (36).

12. Procédé selon la revendication 11, comprenant l'étape consistant à positionner l'élément de connexion (36) sur un côté de la conduite de châssis (28).

13. Procédé selon la revendication 11 ou 12, comprenant l'étape consistant à positionner l'élément de connexion (36) en formant un angle de 0° à 90° par rapport à la jonction (32).
